# FASCICULE DE BREVET EUROPEEN

(11) **EP 1 477 395 B1**
(45) Date de publication et mention de la délivrance du brevet: **14.02.2007**
(21) Numéro de dépôt: 04291106.5
(22) Date de dépôt: 29.04.2004
(51) Int. Cl.: B62D 37/02, B62D 35/00

(54) **Elément aérodynamique d'un véhicule automobile**
Aerodynamisches Formteil für ein Kraftfahrzeug
Aerodynamically shaped element for a motor vehicle

(30) Priorité: 16.05.2003 FR 0305919
(43) Date de publication de la demande: 17.11.2004
(73) Titulaire: Peugeot Citroën Automobiles S.A., 78140 Vélizy Villacoublay (FR)
(72) Inventeur: Lasserre, Jean-Jacques, 92320 Chatillon (FR); Aider, Jean-Luc, 75014 Paris (FR); Despre, Carole, 75008 Paris (FR)
(74) Mandataire: Lanceplaine, Jean-Claude

(56) Documents cités:
- WO-A-02/49906
- DE-A- 3 711 981
- DE-A- 4 209 164
- FR-A- 2 538 767

## Description

La présente invention concerne un véhicule automobile comportant un élément aérodynamique pour la réduction de la traînée et de la portance du véhicule automobile.

Les véhicules automobiles, lorsqu'ils roulent, sont soumis à un certain nombre d'efforts qui s'oppose à leur avancement. Ces efforts sont en particulier les frottements solides, c'est à dire les contacts des roues avec le sol, et les frottements aérodynamiques, comme par exemple les frottements de l'air sur les parois de la carrosserie du véhicule.

En plus de ces frottements, les véhicules automobiles sont soumis à une troisième source d'efforts qui s'oppose également à leur avancement. Ces efforts sont les forces aérodynamiques exercées sur le véhicule à travers des régions de surpression et de dépression. En effet, à haute vitesse, ces efforts deviennent dominant par rapport aux autres et jouent un rôle essentiel sur la consommation et la stabilité du véhicule.

Ces forces aérodynamiques sont essentiellement générées par les dépressions créées par les décollements, les recirculations et les tourbillons longitudinaux de l'air. Les recirculations et donc les régions de basse pression sont importantes sur l'arrière du véhicule et particulièrement au niveau de la lunette arrière et du coffre. En effet, les écoulements de l'air à l'arrière des véhicules automobiles sont complexes et, en général, il se produit un équilibre entre les décollements et les tourbillons longitudinaux.

Le document WO-A-02/49906 décrit un dispositif aérodynamique selon le preamble de la revendication 1, qui comporte un sabot placé devant chaque roue du véhicule pour dévier le flux d'air qui frappe la roue.

On connaît aussi des dispositifs utilisés en aérodynamique automobile qui interviennent sur le décollement qui a lieu sur l'arrière du véhicule, en particulier dans la région du raccord entre le pavillon et la lunette arrière, d'une part, et la lunette arrière et le coffre, d'autre part.

Si effectivement les plus grosses dépressions et les principales structures tourbillonnaires et les décollements sont générés sur la partie arrière du véhicule automobile, la région des roues et des passages de roues est également une zone critique. En effet, l'écoulement de l'air s'engouffre dans le passage de roues et on observe très souvent un décollement en aval de celui-ci.

On observe également toujours un sillage important derrière les roues du véhicule et le sillage des roues avant rencontre les roues arrière et modifie leur sillage. Le sillage des roues et l'écoulement de l'air dans les passages de roues agissent aussi directement sur l'écoulement de l'air au niveau du soubassement du véhicule, modifiant ainsi le débit de l'air sortant de dessous du véhicule et par-là même modifient la structure de l'écoulement de l'air sur l'arrière du véhicule automobile.

Ainsi, la région des roues et des passages de roues est une région très sensible pour l'aérodynamique du véhicule et les constructeurs estiment que ces régions contribuent en moyenne à 15% de la valeur de coefficient de pénétration dans l'air du véhicule automobile.

L'invention a pour but de proposer un véhicule automobile comportant un élément aérodynamique qui permet de modifier la structure de l'écoulement de l'air au niveau des roues et des passages de roues du véhicule automobile et qui permet non seulement de diminuer la portance arrière et donc d'améliorer la stabilité, mais aussi de favoriser une diminution de la traînée du véhicule et donc la consommation de ce dernier.

L'invention a donc pour objet un véhicule automobile comportant un élément aérodynamique pour la réduction de la traînée et de la portance du véhicule automobile, caractérisé en ce que l'élément aérodynamique comprend une plaque verticale s'étendant parallèlement à l'axe longitudinal du véhicule et disposée au-dessous du soubassement dudit véhicule en aval des roues avant et/ou arrière.

Selon d'autres caractéristiques de l'invention :
- la plaque a la forme d'un quadrilatère ou d'un triangle ou d'un quart de cercle,
- la plaque est escamotable dans le soubassement du véhicule automobile,
- la plaque a une largeur comprise entre 5 et 50 cm,
- la plaque est déplaçable entre une première positon intégrée au soubassement du véhicule et une seconde position fixe dépassant au-dessous dudit soubassement, le déplacement de cette plaque entre ces positions étant actionné par au moins un organe de commande en fonction d'informations fournies par au moins un capteur de pression et/ou de vitesse et/ou de frottement implanté sur la carrosserie du véhicule automobile,
- la plaque est déplaçable entre une première position intégrée au soubassement du véhicule et une seconde position dépassant au-dessous dudit soubassement, la hauteur du dépassement de la plaque étant variable et pilotée par au moins un organe de commande en fonction d'informations fournies par au moins un capteur de pression et/ou de vitesse et/ou de frottement implanté sur la carrosserie du véhicule automobile,
- la hauteur du dépassement de la plaque varie entre 0 et 50 cm,
- la plaque a une longueur comprise entre 5 et 50 cm.

L'invention sera mieux comprise à la lecture de la description qui va suivre, donnée à titre d'exemple et faite en se référant aux dessins annexés, sur lesquels :
- la Fig. 1 est une vue schématique de côté d'un véhicule automobile équipé d'au moins un élément aérodynamique conforme à l'invention,
- la Fig. 2 est une vue schématique du soubassement du véhicule automobile équipé d'éléments aérodynamiques conformes à l'invention,
- les Figs. 3A à 3D sont des vues en élévation de plusieurs modes de réalisation d'un élément aérodynamique conforme à l'invention.

Les véhicules automobiles, lorsqu'ils roulent, sont soumis à des efforts qui s'opposent à leur avancement et qui sont les frottements solides, les frottements aérodynamiques et, à haute vitesse les forces aérodynamiques générées par les dépressions et par les décollements, les recirculations et les tourbillons longitudinaux de l'air.

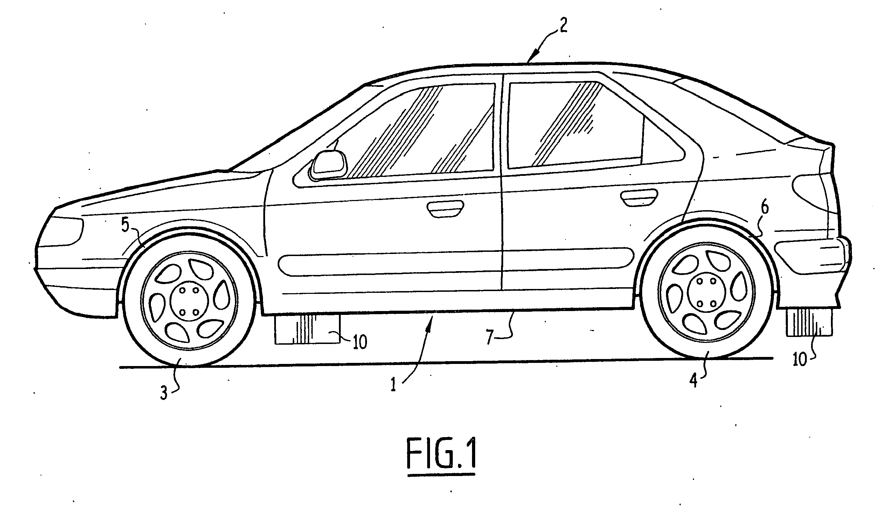

Ainsi, une carrosserie 2 d'un véhicule automobile 1, comme représentée à la Fig. 1, comporte une partie arrière formée par des éléments de carrosserie générant des zones de dépression où ces phénomènes sont particulièrement importants.

Mais, les roues avant 3 et les roues arrière 4 ainsi que les passages de roues avant 5 et les passages de roues arrière 6, comme montré à la Fig. 1, sont des régions également critiques où ces phénomènes de dépressions se produisent aussi.

En effet, l'écoulement de l'air s'engouffre dans les passages de roues 5 et 6 et il se produit très souvent un décollement en aval de ceux-ci. Les roues 3 et 4 génèrent également un sillage important derrière celles-ci si bien que le sillage des roues avant 3 rencontre les roues arrière 4 et modifie leur sillage. Ainsi, le sillage des roues 3 et 4 et l'écoulement de l'air dans les passages de roue 5 et 6 agissent aussi directement sur l'écoulement de l'air sur le soubassement 7 du véhicule automobile modifiant ainsi le débit d'air sortant de dessous de ce véhicule et par-là même modifient la structure de l'écoulement de l'air à l'arrière du véhicule automobile.

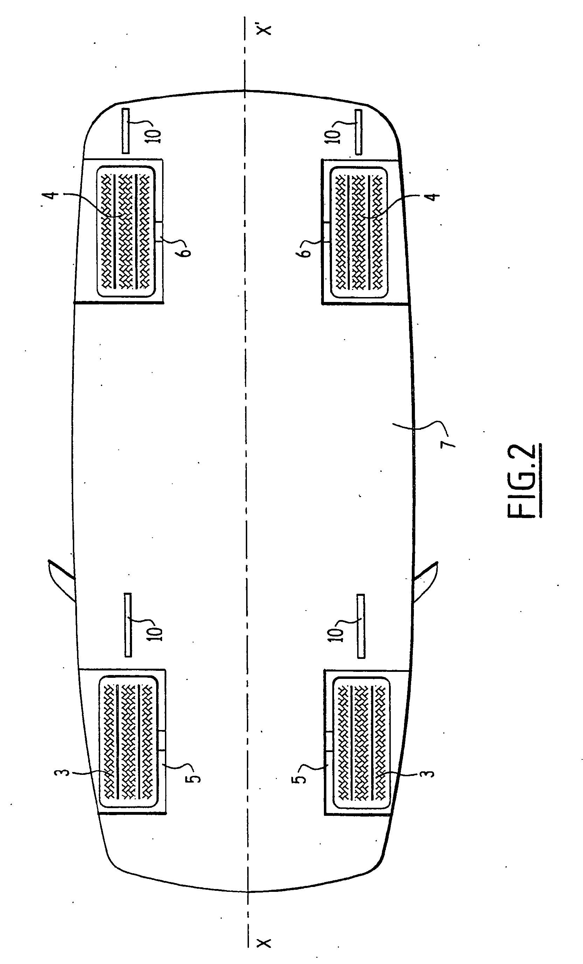

Ainsi que représenté sur les Figs. 1 et 2, le véhicule automobile 1 est équipé d'éléments aérodynamiques pour la réduction de la traînée et de la portance de ce véhicule automobile 1 et qui sont formés chacun par une plaque 10 verticale s'étendant parallèlement à l'axe longitudinal XX' dudit véhicule automobile.

Cette plaque 10 est disposée au-dessous du soubassement 7, ainsi que montré à la Fig. 2.

Dans l'exemple de réalisation représenté sur les figures, une plaque 10 est disposée en aval de chaque roue avant 3 derrière chaque passage de roues 5 et en aval de chaque roue arrière 4 derrière chaque passage de roues 6. Selon une première variante, une plaque 10 peut être disposée uniquement en aval des roues avant 3 et selon une seconde variante, une plaque 10 peut être disposée uniquement en aval des roues arrière 4.

Lors du déplacement du véhicule automobile 1, les plaques 10 alignées dans la direction de l'écoulement de l'air en aval des roues avant 3 et/ou des roues arrières 4 perturbent et détruisent les sillages aérodynamiques des roues correspondantes.

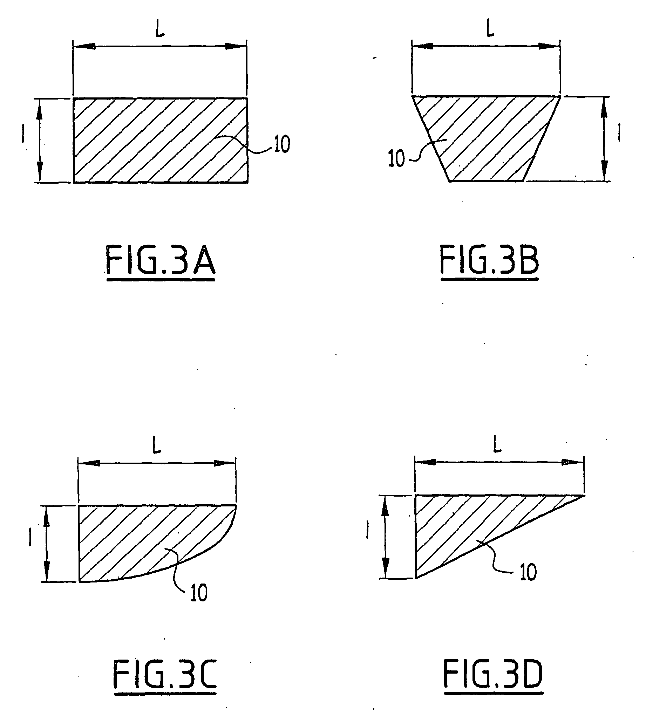

Comme montré sur les Figs. 3A à 3D, la plaque 10 peut présenter différentes formes adaptées au style du véhicule automobile, comme par exemple en forme de quadrilatère, c'est à dire rectangulaire (Figs. 3A) ou trapézoïdale (Fig. 3B), en forme de quart de cercle (Fig. 3C) ou encore en forme de triangle (Fig. 3D).

Selon un premier mode de réalisation, chaque plaque 10 est escamotable dans le soubassement 7 du véhicule automobile et par conséquent déplaçable entre une première position escamotée dans ce soubassement 7 et une seconde position complètement sortie et toujours apparente au-dessous dudit soubassement 7. Le déplacement de la plaque 10 est réalisé au moyen d'un système mécanique approprié de type classique.

Par exemple, la plaque 10 est rentrée dans le soubassement 7 du véhicule automobile lorsque le système aérodynamique est inutile, comme par exemple en ville ou à l'arrêt, et est sortie lorsque les conditions sont adaptées, comme par exemple sur autoroute.

Selon un autre exemple, le déplacement de la plaque 10 entre une première position intégrée au soubassement 7 et une seconde position fixe dépassant de ce soubassement 7, est actionné par au moins un organe de commande en fonction d'informations fournies par au moins un capteur de pression et/ou de vitesse et/ou de frottement implanté sur la carrosserie du véhicule automobile 1.

Chaque plaque 10 a une largeur "l" comprise entre 5 et 50 cm et une longueur "L" comprise entre 5 et 50 cm.

Selon un second mode de réalisation, chaque plaque 10 est dynamique et dans ce cas est déplaçable entre une première position intégrée au soubassement 7 du véhicule automobile et une seconde position dépassant au-dessous de ce soubassement 7. Dans ce cas, la hauteur du déplacement de ladite plaque 10 est variable et se trouve à chaque instant dans une position optimale afin d'adapter l'effet de ladite plaque aux conditions de déplacement du véhicule. Le déplacement de la plaque 10 est piloté par au moins un organe de commande, non représenté, en fonction d'informations fournies par au moins un capteur de pression et/ou de vitesse et/ou de frottement implanté sur la carrosserie du véhicule automobile. La hauteur du dépassement de la plaque 10 varie entre 0 et 50 cm.

L'élément aérodynamique selon l'invention s'applique à un véhicule automobile qu'il soit monospace, bi-corps ou tri-corps et permet donc de réduire la traînée et la portance de ce véhicule et, de ce fait, de diminuer la consommation d'énergie et d'augmenter la stabilité dudit véhicule.

## Revendications

1. Véhicule automobile comportant un élément aérodynamique pour la réduction de la traînée ou de la portance du véhicule automobile (1), **caractérisé en ce que** l'élément aérodynamique comprend une plaque (10) verticale s'étendant parallèlement à l'axe longitudinal du véhicule et disposée au-dessous du soubassement (7) du véhicule en aval des roues avant (3) et/ou arrière (4).

2. Véhicule selon la revendication 1, **caractérisé en ce que** la plaque (10) a la forme d'un quadrilatère ou d'un triangle ou d'un quart de cercle.

3. Véhicule selon la revendication 1 ou 2, **caractérisé en ce que** la plaque (10) est escamotable dans le soubassement (7) du véhicule automobile.

4. Véhicule selon l'une quelconque des revendications 1 à 3, **caractérisé en ce que** la plaque (10) a une largeur comprise entre 5 et 50 cm.

5. Véhicule selon la revendication 1 ou 2, **caractérisé en ce que** la plaque (10) est déplaçable entre une première position intégrée au soubassement (7), du véhicule et une seconde position fixe dépassant au-dessous dudit soubassement (7), le déplacement de cette plaque entre ces positions étant actionné par au moins un organe de commande en fonction d'informations fournies par au moins un capteur de pression et/ou de vitesse et/ou de frottement implanté sur la carrosserie du véhicule automobile (1).

6. Véhicule selon la revendication 1 ou 2, **caractérisé en ce que** la plaque (10) est déplaçable entre une première position intégrée au soubassement (7) du véhicule et une seconde position dépassant au-dessous dudit soubassement (7), la hauteur du dépassement de la plaque (10) étant variable et pilotée par au moins un organe de commande en fonction d'informations fournies par au moins un capteur de pression et/ou de vitesse et/ou de frottement implanté sur la carrosserie du véhicule automobile (1).

7. Véhicule selon la revendication 5 ou 6, **caractérisé en ce que** la hauteur du dépassement de la plaque (10) varie entre 0 et 50 cm.

8. Véhicule selon l'une quelconque des revendications 1 à 7, **caractérisé en ce que** la plaque (10) a une longueur comprise entre 5 et 50 cm.

## Claims

1. Automobile vehicle having an aerodynamic element for reducing the drag or lift of said automobile vehicle (1), **characterised in that** said aerodynamic element comprises a vertical plate (10) which extends parallel to the longitudinal axis of the vehicle and is disposed underneath the sub-frame (7) of the vehicle, downstream of the front wheels (3) and/or rear wheels (4).

2. Vehicle according to claim 1, **characterised in that** the plate (10) has the shape of a quadrilateral or a triangle or a quarter-circle.

3. Vehicle according to claim 1 or 2, **characterised in that** the plate (10) can be retracted into the sub-frame (7) of the automobile vehicle.

4. Vehicle according to any of claims 1 to 3, **characterised in that** the plate (10) has a width of between 5 and 50 cm.

5. Vehicle according to claim 1 or 2, **characterised in that** the plate (10) can be displaced between a first position which is integrated into the sub-frame (7) of the vehicle and a second, fixed position which protrudes underneath the said sub-frame (7), displacement of the said plate between the said positions being activated by at least one control component in accordance with information supplied by at least one pressure and/or speed and/or friction sensor located on the body of the automobile vehicle (1).

6. Vehicle according to claim 1 or 2, **characterised in that** the plate (10) can be displaced between a first position which is integrated into the sub-frame (7) of the vehicle and a second position which protrudes underneath the said sub-frame (7), the length by which the plate (10) protrudes being variable and driven by at least one control component in accordance with information supplied by at least one pressure and/or speed and/or friction sensor located on the body of the automobile vehicle (1).

7. Vehicle according to claim 5 or 6, **characterised in that** the length by which the plate (10) protrudes varies between 0 and 50 cm.

8. Vehicle according to any of claims 1 to 7, **characterised in that** the plate (10) has a length of between 5 and 50 cm.

## Patentansprüche

1. Kraftfahrzeug, das ein aerodynamisches Element für die Verringerung des Luftwiderstandes oder des Auftriebs des Kraftfahrzeugs (1) umfasst, **dadurch gekennzeichnet, dass** das aerodynamische Element eine vertikale Platte (10) umfasst, die sich parallel zur Längsachse des Fahrzeugs erstreckt und unter der Wagenunterseite (7) hinter den Vorderrädern (3) und/oder den Hinterrädern (4) angeordnet ist.

2. Fahrzeug nach Anspruch 1, **dadurch gekennzeichnet, dass** die Platte (10) die Form eines Vierecks oder eines Dreiecks oder eines Viertelkreises hat.

3. Fahrzeug nach Anspruch 1 oder 2, **dadurch gekennzeichnet, dass** die Platte (10) in die Wagenunterseite (7) des Kraftfahrzeugs einklappbar ist.

4. Fahrzeug nach einem der Ansprüche 1 bis 3, **dadurch gekennzeichnet, dass** die Platte (10) eine Breite im Bereich von 5 bis 50 cm hat.

5. Fahrzeug nach Anspruch 1 oder 2, **dadurch gekennzeichnet, dass** die Platte (10) zwischen einer ersten Stellung, in der sie in die Wagenunterseite (7) des Fahrzeugs integriert ist, und einer zweiten festen Stellung, in der sie von der Wagenunterseite (7) nach unten vorsteht, verlagerbar ist, wobei die Verlagerung der Platte zwischen diesen Stellungen durch wenigstens ein Steuerorgan in Abhängigkeit von Informationen, die von wenigstens einem Druck- und/oder Geschwindigkeits- und/oder Reibungssensor, der in die Karosserie des Kraftfahrzeugs (1) eingesetzt ist, geliefert werden, betätigt wird.

6. Fahrzeug nach Anspruch 1 oder 2, **dadurch gekennzeichnet, dass** die Platte (10) zwischen einer ersten Stellung, in der sie in die Wagenunterseite (7) des Fahrzeugs integriert ist, und einer zweiten Stellung, in der sie von der Wagenunterseite (7) nach unten vorsteht, verlagerbar ist, wobei die Höhe, um die die Platte (10) vorsteht, veränderlich ist und durch wenigstens ein Steuerorgan in Abhängigkeit von Informationen, die von wenigstens einem Druck- und/oder Geschwindigkeits- und/oder Reibungssensor, der in die Karosserie des Kraftfahrzeugs (1) eingesetzt ist, geliefert werden, gesteuert wird.

7. Fahrzeug nach Anspruch 5 oder 6, **dadurch gekennzeichnet, dass** die Höhe, um die die Platte (10) vorsteht, zwischen 0 und 50 cm veränderlich ist.

8. Fahrzeug nach einem der Ansprüche 1 bis 7, **dadurch gekennzeichnet, dass** die Platte (10) eine Länge im Bereich von 5 bis 50 cm hat.
